# EUROPEAN PATENT SPECIFICATION

(11) **EP 2 957 421 B1**
(45) Date of publication and mention of the grant of the patent: **09.08.2017**
(21) Application number: 15171643.8
(22) Date of filing: 11.06.2015
(51) Int. Cl.: B29D 30/06, B29C 37/00, B29C 33/38, B60C 99/00

(54) **METHOD FOR ESTIMATING SHAPE OF VULCANIZATION-MOLDED TIRE**
VERFAHREN ZUR BESTIMMUNG DER FORM EINES DURCH VULKANISIERUNG GEFORMTEN REIFENS
PROCÉDÉ POUR ESTIMER LA FORME DE PNEU MOULÉ PAR VULCANISATION

(30) Priority: 18.06.2014 JP 2014125632
(43) Date of publication of application: 23.12.2015
(73) Proprietor: SUMITOMO RUBBER INDUSTRIES LIMITED, Kobe-shi, Hyogo-ken (JP)
(72) Inventor: TSUNODA, Masaya, Kobe-shi, Hyogo-ken, 651-0072 (JP); FUJISAWA, Kazuhiro, Kobe-shi, Hyogo-ken, 651-0072 (JP)
(74) Representative: Manitz Finsterwald Patentanwälte PartmbB

(56) References cited:
- EP-A1- 2 662 792
- JP-A- H07 112 481
- JP-A- 2009 078 618
- JP-A- 2012 056 546
- JP-B2- 5 297 223

## Description

### Background of the Invention

The present invention relates to a computer-implemented method for estimating a shape of a tire molded by a vulcanization mold.

Japanese Patent No. 5297223 discloses a computer-implemented simulation method for a pneumatic tire in which a finite element model of the tire is defined based on the shape of the molding surface of a tire vulcanizing mold.

In actuality, a tire vulcanizing mold is thermally-expanded during vulcanizing the tire due to the tire heating temperature. Accordingly, the shape of the molding surface during tire vulcanization is different from the shape before tire vulcanization. Therefore, the shape of the finite element model of the tire defined based on the shape of the molding surface before tire vulcanization is different from the actual shape of the tire after vulcanization. As a result, there is a problem with simulation accuracy.

Document JP H07 112481 A is related to the planning of a shape of a blow molded bottle by a blow molding analysis. The shape model of a blow mold and that of a preform are divided into elements and a finite-element method is adapted. Blow molding analysis is performed by taking account of changes undergone by the mold when calculating the resulting shape of the molded bottle.

### Summary of the Invention

It is an object of the present invention to provide a computer-implemented method for estimating a shape of a tire molded by a vulcanization mold, in which the shape of the molding surface of the mold during tire vulcanization is accurately simulated, and the shape of the molded tire can be accurately estimated.

The object is satisfied by a computer-implemented method in accordance with the features of claim 1. Preferred embodiments of the present invention are described in the dependent claims.

### Brief Description of the Drawings

Fig. 1 is a perspective view of an example of the computer implementing the method according to the present invention.
Fig. 2 is a cross sectional view of a raw tire.
Fig. 3(a) is a perspective partial view of a carcass ply.
Fig. 3(b) is a perspective partial view of a tread reinforcing belt.
Fig. 4 is a cross sectional view for explaining a method for manufacturing the raw tire.
Fig. 5 is a cross sectional view for explaining a method for vulcanizing the raw tire in a mold.
Fig. 6 is a flowchart of the method as an embodiment of the present invention.
Fig. 7 is a flowchart of a raw tire model defining process.
Fig. 8 is a perspective partial view of a casing model.
Fig. 9 is an exploded perspective view of a part of a carcass ply model.
Fig. 10 is a perspective view of a part of a tread ring model.
Fig. 11 is an exploded perspective view of a part of a belt model.
Fig. 12 is a flowchart of a cord model defining process.
Fig. 13 is a cross sectional view for explaining a process for defining a raw tire model.
Fig. 14 shows a part of a primary mold model rendered as a perspective view.
Fig. 15 shows the primary mold model rendered as a cross sectional view wherein only the boundaries are shown.
Fig. 16 is a flowchart of a mold deformation process.
Fig. 17 is a flowchart of a thermally expanding process.
Fig. 18 is a flowchart of a bladder pressurizing process.
Fig. 19 is a flowchart of a tire shape acquiring process.
Fig. 20 is a cross sectional view showing a bladder model contacting with the tire model.
Fig. 21 is a cross sectional view showing the tire model set in the secondary mold model.
Fig. 22 is a cross sectional view showing the tire model during tire vulcanization.
Fig. 23 is a flowchart of a shrinking process.

### Description of the Preferred Embodiments

Embodiments of the present invention will now be described in detail in conjunction with the accompanying drawings.

The method according to the present invention is for estimating a shape of a tire vulcanization-molded by a molding surface of a mold by the use of a computer.

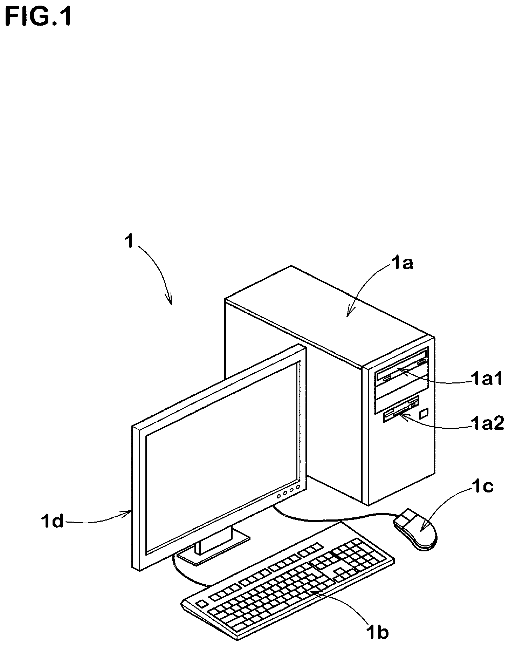

As shown in Fig. 1 for example, the computer 1 implementing the method according to the present invention comprises a main body 1a, a keyboard 1b, a mouse 1c and a display 1d. The main body 1a comprises an arithmetic processing unit (CPU), memory, storage devices such as magnetic disk, disk drives 1a1 and 1a2 and the like. In the storage device, programs/software for carrying out the method is stored.

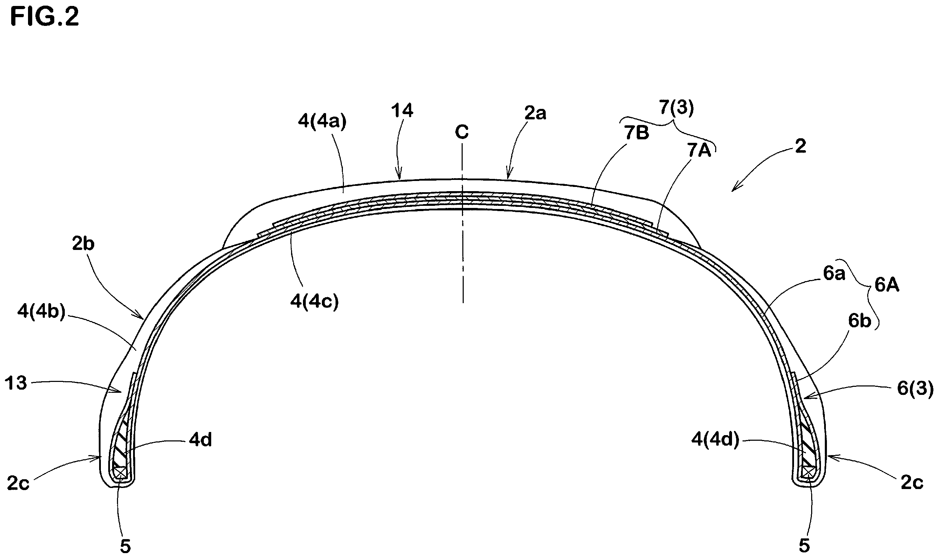

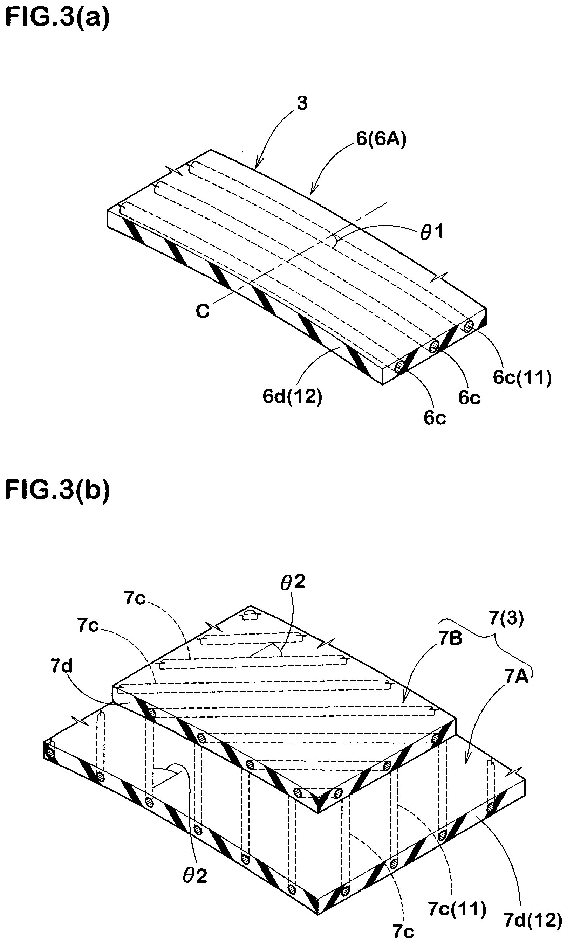

The tire in this embodiment is a pneumatic tire. As shown in Fig. 2 and Fig. 3, the raw tire 2 comprises reinforcing cord members 3 each made of cords 11 rubberized by unvulcanized rubber 12.

In this embodiment, the reinforcing cord members 3 include: a carcass 6 extending between bead portions 2c through a tread portion 2a and sidewall portions 2b and secured to bead cores 5, and a belt 7 disposed radially outside the carcass 6 in the tread portion 2a.

The carcass 6 is composed of at least one, in this embodiment only one ply 6A of cords 6c, for example, arranged at an angle θ1 in a range of from 75 to 90 degrees with respect to the tire equator C, and rubberized by unvulcanized topping rubber 6d.
The carcass ply 6A extends between the bead portions 2c through the tread portion 2a and sidewall portions 2b and is turned up around the bead core 5 in each bead portion from the inside to the outside of the tire so as to form a pair of turned up portions 6b and a main portion 6a therebetween. For example, organic fiber cords, e.g. polyester, nylon, rayon, aramid and the like are used as the carcass cords 6c.

The belt 7 is composed of at least two plies, in this embodiment only two plies 7A and 7B of cords 7c, for example, inclined at an angle θ2 of from 10 to 40 degrees with respect to the tire circumferential direction, and rubberized by unvulcanized topping rubber 7d. The cords 7c of the radially inner ply 7A are arranged crosswise to the cords 7c of the radially outer ply 7B. For example, high elastic modulus organic fiber cords such as aramid and rayon, or steel cords are used as the belt cords 7c.

The raw tire 2 comprises unvulcanized rubber members 4. The rubber members 4 include an unvulcanized tread rubber 4a disposed radially outside the belt 7, sidewall rubbers 4b disposed axial outside the carcass 6, an inner liner rubber 4c disposed on the inside of the carcass 6, and a bead apex rubber 4d disposed between the main portion 6a and each turned up portion 6b and extending from the bead core 5 toward the tread rubber 4a.
Further, the rubber members 4 include the topping rubber layers 6d of the carcass ply 6A and the topping rubber layers 7d of the belt plies 7A and 7B.

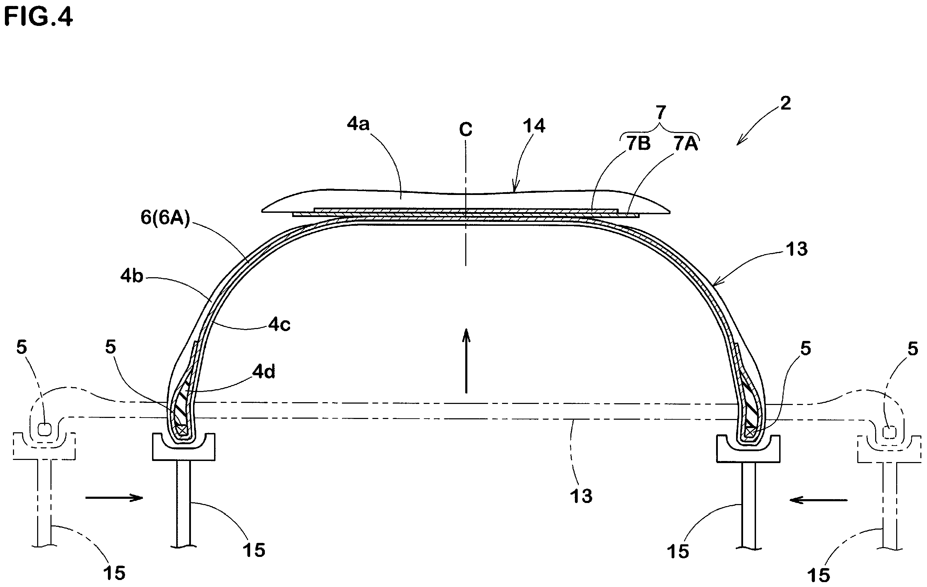

Fig. 4 is a cross sectional view for explaining a method for manufacturing the raw tire 2.

In this method, the unvulcanized inner liner rubber 4c, the carcass ply 6A, the bead cores 5, the unvulcanized bead apex rubbers 4d, and the unvulcanized sidewall rubbers 4b are applied onto a cylindrical drum (not shown), and
a cylindrical casing 13 (indicated by chain double-dashed line) is formed.

On the other hand, the belt plies 7A and 7B and the unvulcanized tread rubber 4a are applied onto another drum (not shown) having a larger diameter than the above-mentioned drum, and a cylindrical tread ring 14 is formed.

The casing 13 is held by bead clamps 15 at the bead cores 5, and the casing 13 is swollen into a toroidal shape while decreasing the axial distance between the bead cores 5. Thereby, the outer circumferential surface of the swollen casing 13 is adhered to the inner circumferential surface of the tread ring 14 waiting on the radially outside of the casing 13. Thus, the raw tire 2 as shown in Fig. 2 is manufactured.

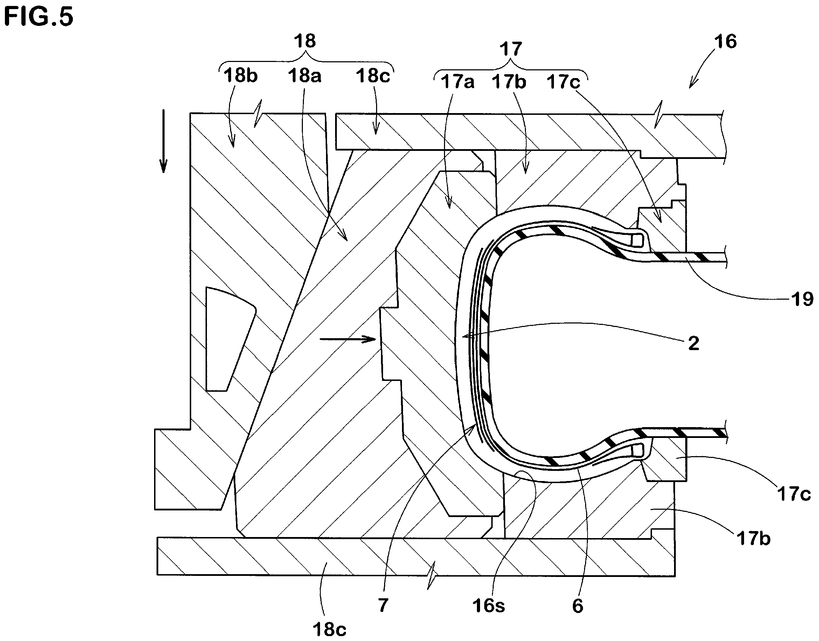

Fig. 5 is cross sectional view for explaining a process for vulcanization-molding the raw tire 2.
In this process, the raw tire 2 is put in a mold device 16.
The mold device 16 comprises a plurality of segment dies 17 which collectively form the mold having a molding surface 16s for shaping the raw tire 2, a mold-closer 18 for tightening the segment dies 17 from the radially outside thereof, and an inflatable bladder 19 for pressing the raw tire 2 against the molding surface 16s.

The segment dies 17 include tread segment dies 17a for shaping the tread portion 2a of the raw tire 2, sidewall segment dies 17b for shaping the sidewall portions 2b of the raw tire 2, and bead segment dies 17c for shaping the bead portions 2c of the raw tire 2.

The mold-closer 18 comprises a pusher 18a disposed radially outside the tread segment dies 17a to push them radially inwardly, a slide part 18b for pushing the pusher 18a toward the radially inside, and a pair of side plates 18c disposed on both sides of the sidewall segment dies 17b in the axial direction.
when the slide part 18b is moved in a tire axial direction (downward in Fig. 5), the segment dies 17 are pushed tightly toward the radially inside, through the pusher 18a.

In the vulcanization process using the mold device 16, the segment dies 17 are tighten by the mold-closer 18 under such state that the raw tire 2 is placed between the segment dies 17 and the bladder 19, and
the raw tire 2 is pressed onto the molding surface 16s by inflating the bladder 19, and
the raw tire 2 is heated to be vulcanization molded. Thus, the tire (not shown) is manufactured.

During vulcanizing the tire, the segment dies 17 are deformed by thermal expansion and pressure from the mold-closer 18 and the bladder 19. Therefore, the shape of the molding surface 16s of the mold device 16 during vulcanization becomes different from the shape of the molding surface 16s of the mold device 16 before tire vulcanization.

As explained above, in the conventional simulation method, the shape of the finite element tire model is defined based on the shape before tire vulcanization, therefore, the calculated shape of the tire model becomes different from the shape of the actual vulcanized tire, and it is difficult to obtain accurate simulation results.

In the method according to the present invention, the shape of the tire model is defined based on the shape of the mold model obtained through a deformation calculation performed based on conditions during vulcanization. Therefore, it is possible to obtain accurate simulation results.

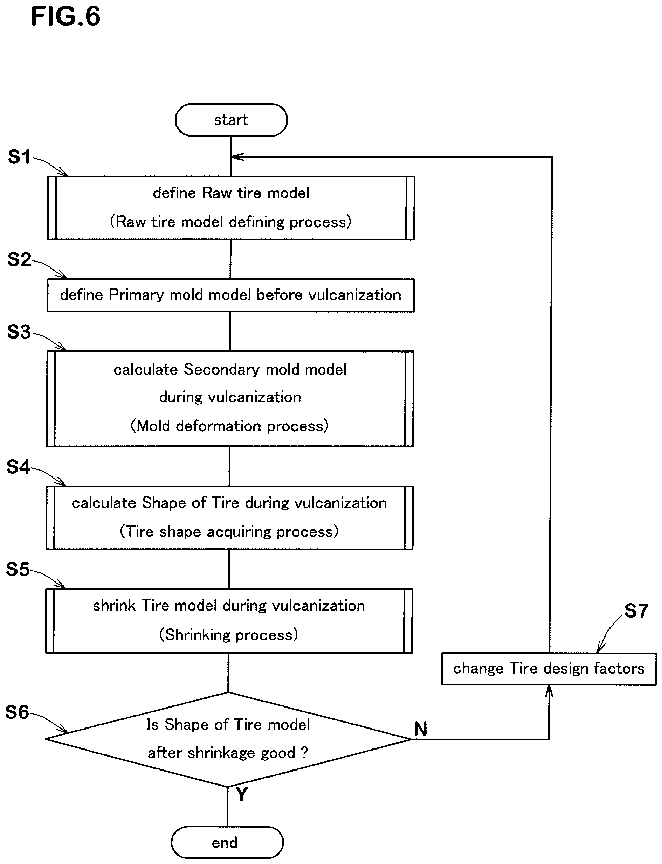

Fig. 6 is a flowchart of the method for estimating a shape of a vulcanization-molded tire as an embodiment of the present invention.

### * Raw tire model defining process S1

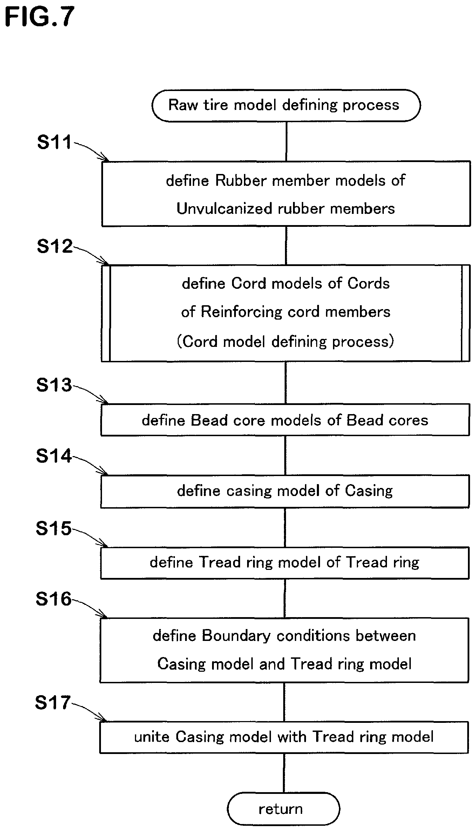

A raw tire model 23 of the raw tire 2 before put in the mold device 16 as shown in Fig. 2 is defined in the computer 1. More detail of this process S1 is shown in Fig. 7.

### Process S11

In the process S1, rubber member models 31 of the unvulcanized rubber members 4 of the raw tire 2 are defined.

### (Process S11)

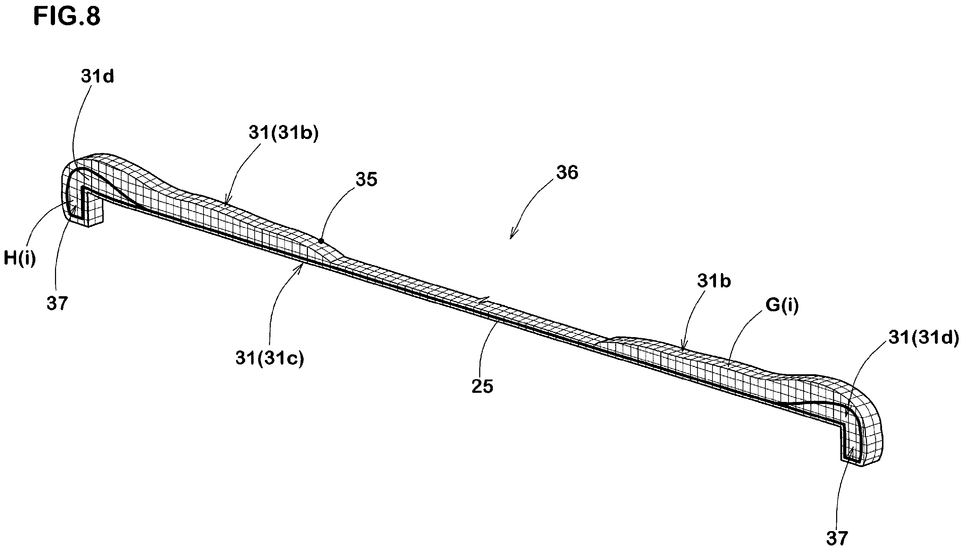

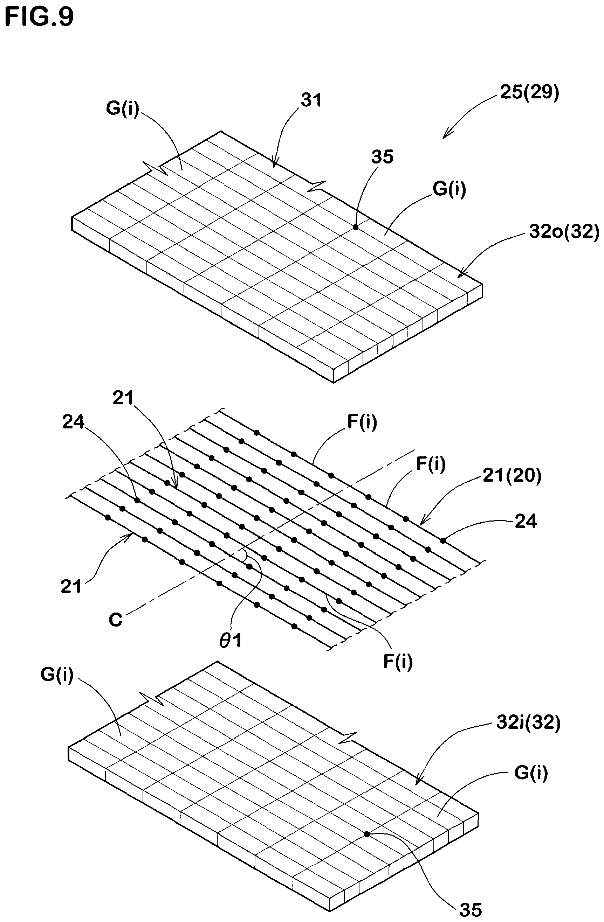

In this process S11, based on design data (for example, CAD data) about the unvulcanized casing 13 wound on the drum (not shown), the unvulcanized sidewall rubbers 4b, the inner liner rubber 4c, the bead apex rubbers 4d, and the topping rubber layers 6d of the carcass ply 6A are numerically-modeled (discretization) by the use of a finite number of elements G(i) (i=1,2,--), therefore, sidewall rubber models 31b, an inner liner rubber model 31c, bead apex rubber models 31d and carcass topping rubber layer models 32 are respectively defined as shown in Fig. 8.
As shown in Fig. 9, the carcass topping rubber layer models 32 comprises an inside topping rubber layer model 32i and an outside topping rubber layer model 32o for each carcass ply 6A.

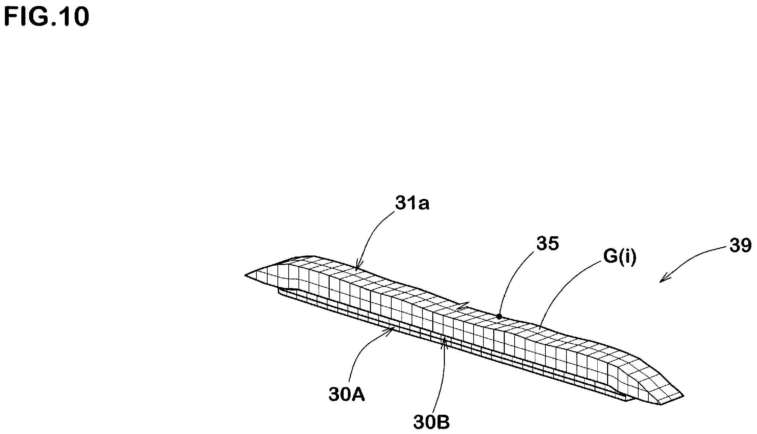

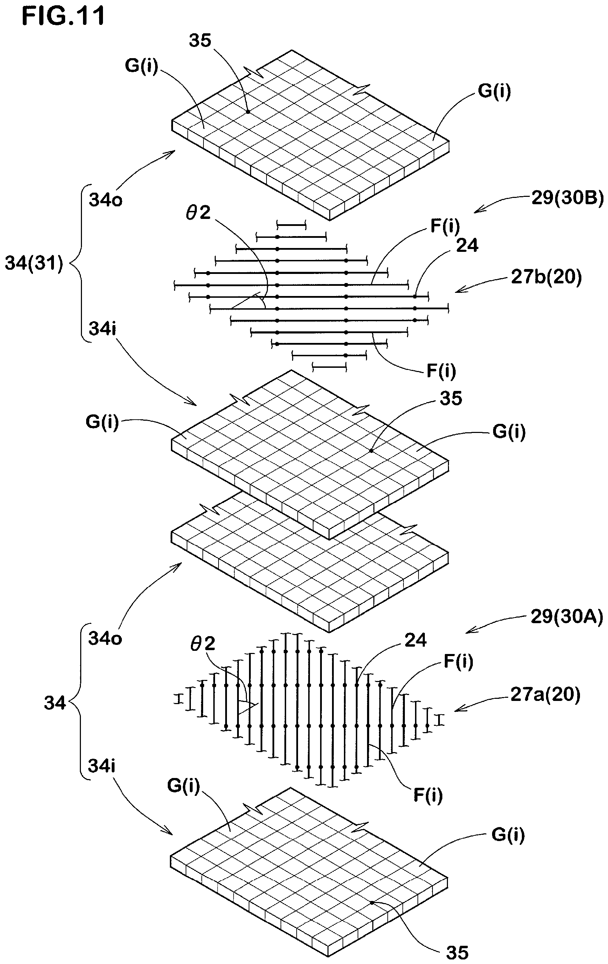

In this process S11, further, based on data (for example, CAD data) about contours of the unvulcanized tread ring 14 (shown in Fig. 4) wound on the drum (not shown), the unvulcanized tread rubber 4a and the topping rubber layers 7d of the belt plies 7A and 7B are numerically-modeled (discretization) by the use of a finite number of elements G(i), therefore, a tread rubber model 31a and belt topping rubber layer models 34 are defined as shown in Fig. 10. As shown in Fig. 11, the belt topping rubber layer models 34 comprises an inside topping rubber layer model 34i and an outside topping rubber layer model 34o for each belt ply 7A, 7B. The elements G(i) of the rubber member models 31 of the unvulcanized rubber members 4 are three-dimensional solid elements. Tetrahedral elements are preferably used as such solid elements. But, in addition, pentahedral elements and hexahedral elements may be used alone or in combination.

On each element G(i), its data, for example, identification number of the element, identification number and coordinates of each node 35, material characteristics of the unvulcanized rubber (for example, density, elastic modulus, loss tangent, damping coefficient, isotropic coefficient of thermal expansion, etc.) and the like are defined.
Such rubber member models 31 are stored in the computer 1.

### * Cord model defining process S12

In the raw tire model defining process S1 in this embodiment, cord models 20 of the cords of the reinforcing cord members 3 are defined. (Cord model defining process S12)

### * Process S121

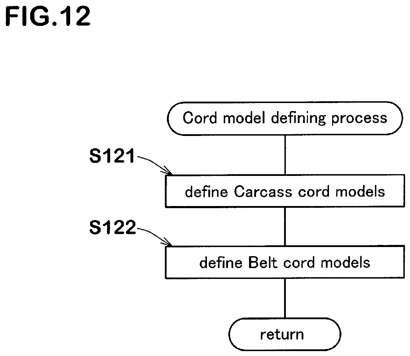

In this process S12, as shown in Fig. 12, each of the carcass cords 6c as shown in Fig. 3(a) is numerically-modeled by beam elements F(i) (i=1,2,---) as shown in Fig. 9, therefore, carcass cord models 21 are defined in the computer 1.

### (process S121)

Based on design data (for example, CAD data) about an arrangement of the carcass cords 6c, the beam elements F(i) of the carcass cords 6c are arranged in series along the respective cords.

Such arrangement of the beam elements F(i) can be achieved by the use of a mesh generation software or preprocessor for example.

A beam element F(i) is a one-dimensional linear element processable by a numerical analysis method such as finite element method, finite volume method, difference method and boundary element method. In this embodiment, a finite element method is employed as a numerical analysis method. By using such beam elements F(i), the tensional force and compaction force of a cord 11 in its longitudinal direction can be calculated in a numerical analysis method.
On each beam element F(i), its data, for example, coordinates of each node 24, and material characteristics of the cord (for example, elastic modulus, coefficient of thermal expansion in the longitudinal direction of the cord) are defined. In this embodiment, the elastic modulus includes the elastic modulus Ee in the tensile direction and the elastic modulus Ec in the compression direction.
For example, in the case of the organic fiber cord, the elastic modulus Ee is set to be more than the elastic modulus Ec. However, the ratio Ee/Ec can be arbitrarily defined according to the material of the carcass cord. In this embodiment, the ratio Ee/Ec is set in a range of from 1.1 to 2.0.
The carcass cord models 21 are thus defined and stored in the computer 1.

In the process S12, further, the belt cords 7c as shown in Fig. 3(b) are numerically-modeled by beam elements F(i), and belt cord models 27 are defined in the computer. (process S122)

In this process S122, based on design data (for example, CAD data) about an arrangement of the belt cords 7c of the belt plies 7A and 7B as shown in Fig. 3(b), each belt cord 7c is modeled by a plurality of beam elements F(i) arranged in series along the length direction of the cord.
Therefore, as shown in Fig. 11, inside belt cord models 27a of the belt cords 7c of the radially inner belt ply 7A and outside belt cord models 27b of the belt cords 7c of the radially outer belt ply 7B are defined.
On each beam element F(i), its data, for example, coordinates of each node 24, and material characteristics of the belt cord 7c (for example, elastic modulus, and coefficient of thermal expansion in the longitudinal direction of the cord) are defined.

In this embodiment, the elastic modulus includes the elastic modulus Ee in the tensile direction and the elastic modulus Ec in the compression direction.
For example, in the case of the organic fiber cord, the elastic modulus Ee is set to be more than the elastic modulus Ec. However, the ratio Ee/Ec can be arbitrarily defined according to the material of the belt cord. In this embodiment, the ratio Ee/Ec is set in a range of from 1.1 to 2.0.
The belt cord models 27a and 27b are thus defined and stored in the computer 1.

### * Process S13

In the raw tire model defining process S1 in this embodiment, a bead core model of the bead core 5 is defined.

### (Process S13)

In this process S13, based on design data (for example, CAD data) about the unvulcanized casing 13 wound on the drum (not shown), each bead core 5 is numerically-modeled (discretization) by a finite number of elements H(i) (i=1,2,---), therefore, a bead core model 37 is defined in the computer 1 as shown in Fig. 8. The elements H(i) are three-dimensional solid elements. Preferably those of the same kind as the above-mentioned elements G(i) are used.

On each element H(i), its data, for example, identification number of the element, identification number and coordinates of each node, material characteristics of the bead core 5 (for example, isotropic coefficient of thermal expansion) and the like are defined. The bead core model 37 is thus defined and stored in the computer 1.

### * Process S14

In the raw tire model defining process S1 in this embodiment, a casing model of the casing 13 (shown in Fig. 4) is defined in the computer 1. (Process S14)

In this process S14, on the sidewall rubber models 31b, the inner liner rubber models 31c, the bead apex rubber models 31d, the carcass topping rubber layer models 32 and the carcass cord models 21 shown in Fig. 8 and Fig. 9, boundary conditions including immobilization conditions are defined, therefore, a generally-cylindrical casing model 36 of the casing 13 is defined.
The carcass cord models 21 are fixed between the carcass topping rubber layer models 32i and 32o, and a carcass ply model 25 as a reinforcing cord member model 29 is defined.
Such casing model 36 is stored in the computer 1.

### * Process S15

In the raw tire model defining process S1 in this embodiment, a tread ring model of the tread ring 14 (shown in Fig. 4) is defined in the computer 1. (Process S15)

In this process S15, on the tread rubber model 31a, the belt topping rubber layer models 34 and the belt cord models 27a and 27b as shown in Fig. 10 and Fig. 11, boundary conditions including immobilization conditions are defined, therefore, a generally-cylindrical tread ring model 39 of the tread ring 14 is defined.
The belt cord models 27a, 27b are fixed between the belt topping rubber layer models 34i and 34o, and belt ply models 30A and 30B as reinforcing cord member models 29 are defined. Such tread ring model 39 is stored in the computer 1.

### * Process S16

In the raw tire model defining process S1 in this embodiment, boundary conditions between the casing model 36 and the tread ring model 39 are defined in the computer 1.

### (process S16)

The boundary conditions include contact conditions between the radially outer surface 36o of the casing model 36 and the radially inner surface 39i of the tread ring model 39. Such boundary conditions are stored in the computer 1.

### * Process S17

In the raw tire model defining process S1 in this embodiment, the casing model 36 is united with the tread ring model 39 by the computer 1. (Process S17)

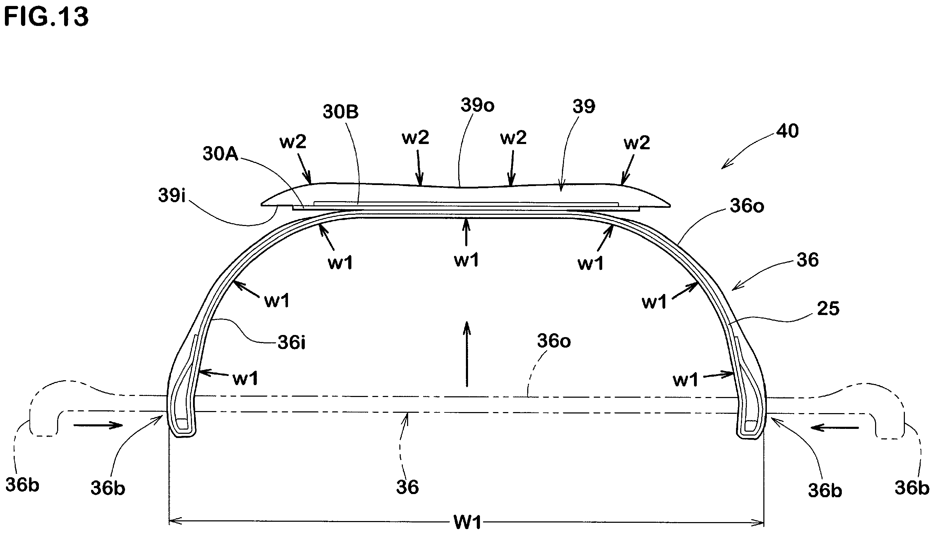

In this process S17, as shown in Fig. 13, a deformation calculation for swelling the casing model 36 is performed by the computer 1.
In this embodiment, firstly, a uniformly-distributed load w1 is defined on the inner surface 36i of the casing model 36. Further, a deformation calculation for decreasing the axial distance w1 between the bead portions 36b of the casing model 36 is performed by the computer 1.
Thus, a deformed state of the swollen casing model 36 is calculated.
By the swelling of the casing model 36, the outer surface 36o of the casing model 36 contacts with the inner surface 39i of the tread ring model 39.

The deformation calculation of the casing model 36, the tread ring model 39 and the like is performed at time steps Tx(x=0,1,---) based on the shapes, the material characteristics and the like of the elements F(i), G(i) and H(i). Such deformation can be calculated by utilizing a commercially available finite element analysis application software, for example, "LS-DYNA" of JSOL Corporation.

In the process S17, next, as shown in Fig. 13, a uniformly-distributed load w2 is defined on the outer surface 39o of the tread ring model 39, and a state of the tread ring model 39 deformed along the outer surface 36o of the casing model 36 is calculated.
Then, boundary conditions for inhibiting relative displacement between the outer surface 36o of the casing model 36 and the inner surface 39i of the tread ring model 39 are defined, therefore, the casing model 36 and the tread ring model 39 are united with each other.
Then, the boundary conditions of the uniformly-distributed loads w1 and w2 are removed.
The raw tire model 40 of the raw tire 2 defined in this way is stored in the computer 1.

In the process S17, as the casing model 36 and the tread ring model 39 are deformed, the carcass ply model 25 and the belt ply models 30A and 30B are also deformed. As explained above, the carcass cord models 21 and the belt cord models 27a and 27b in this embodiment are each made up of beam elements F(i) so that the cord models can deform independently from each other. Therefore, the raw tire model 40 in this embodiment can simulate variations of the cords 11 in the angle and/or spacing due to the deformation of the reinforcing cord members 3 during vulcanization-molding the raw tire. Further, since the cord models 21, 27a and 27b are provided with the elastic moduli Ee and Ec as explained above, the cord models 21, 27a and 27b can accurately simulate the elongations of the carcass cords 6c and belt cords 7c. Accordingly, the formation process of the raw tire 2 can be simulated with high accuracy.

### * Process S2

In the method in this embodiment, a primary mold model of the mold before tire vulcanization is defined in the computer.

### (Process S2)

In this embodiment, based on design data (for example, CAD data) about the mold device 16 before tire vulcanization (shown in Fig. 5), the mold device 16 including the segment dies 17, the mold-closer 18 and the bladder 19 is numerically-modeled (discretization) by a finite number of elements J(i) (i=1,2,---), therefore, there is defined the primary mold model 46 including segment dies models 47, a mold-closer model 48 and a bladder model 49. The elements J(i) are three-dimensional solid elements. Preferably those of the same kind as the above-mentioned elements G(i) are used.

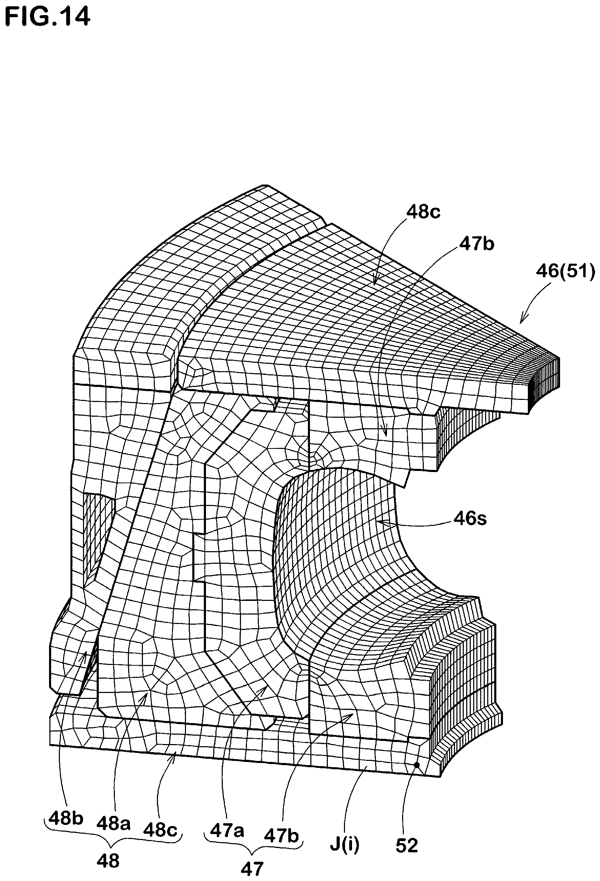

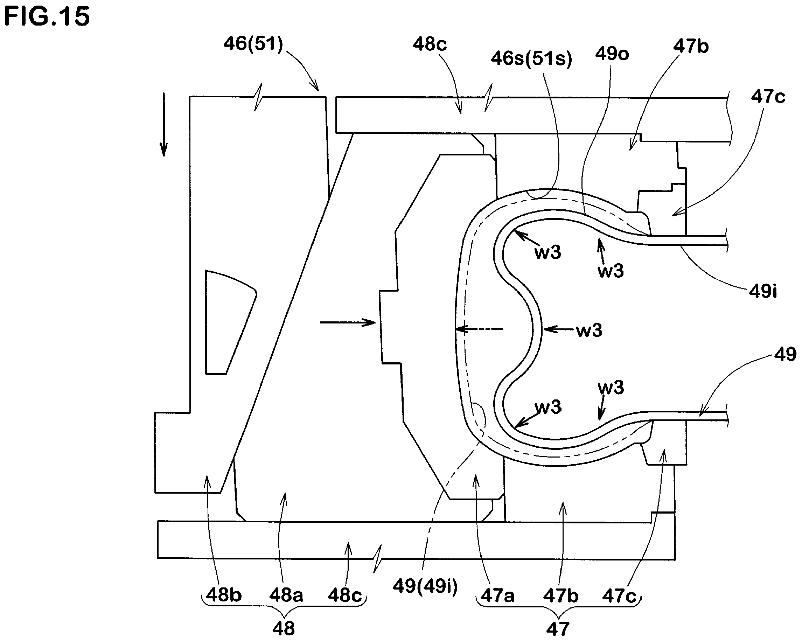

In this embodiment, as shown in Fig. 14 and Fig. 15, the segment dies models 47 include tread segment dies models 47a of the tread segment dies 17a, sidewall segment dies models 47b of the sidewall segment dies 17b, and bead segment dies models 47c of the bead segment dies 17c, and these models are provide with boundary conditions to inhibit to intrude each into others.

Further, the mold-closer model 48 includes a pusher model 48a of the pusher 18a, a slide part model 48b of the slide part 18b, and side plate models 48c of the side plates 18c, and these models are provide with boundary conditions to inhibit to intrude each into others.

On each element J(i), its data, for example, identification number of the element, identification number and coordinates of each node, material characteristics of the mold device 16 shown in Fig. 5 (for example, isotropic coefficient of thermal expansion) and the like are defined.
Such primary mold model 46 is stored in the computer 1.

### * Mold deformation process S3

In the method in this embodiment, next, based on conditions during vulcanizing the tire, the shape of the primary mold model 46 during tire vulcanization is calculated by the computer 1, and a secondary mold model 51 having the obtained shape is defined. (Mold deformation process S3)

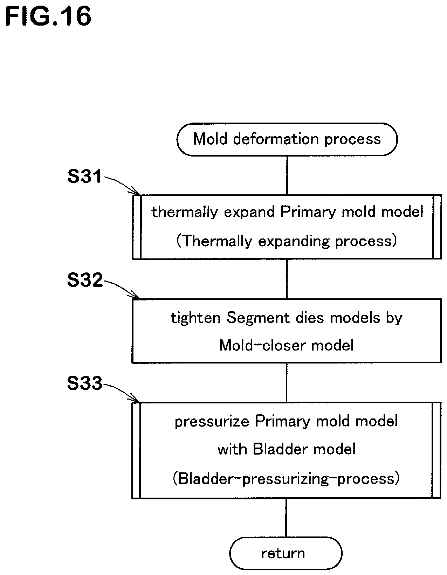

Fig. 16 shows a flowchart of this process S3.

### * Thermally-expanded process S31

In the process S3, firstly, the primary mold model 46 is thermally-expanded based on the temperature during tire vulcanization. (Thermally expanding process S31)

In this process S31, the shape of the thermally-expanded primary mold model 46 is calculated based on predetermined thermal-expansion conditions.

The thermal-expansion conditions include an ordinary temperature (for example, 25 deg.C), a vulcanization temperature (for example, 180 deg.C), and a unit temperature raise when raising from the ordinary temperature to the vulcanization temperature (for example, 10 to 20 deg.C).

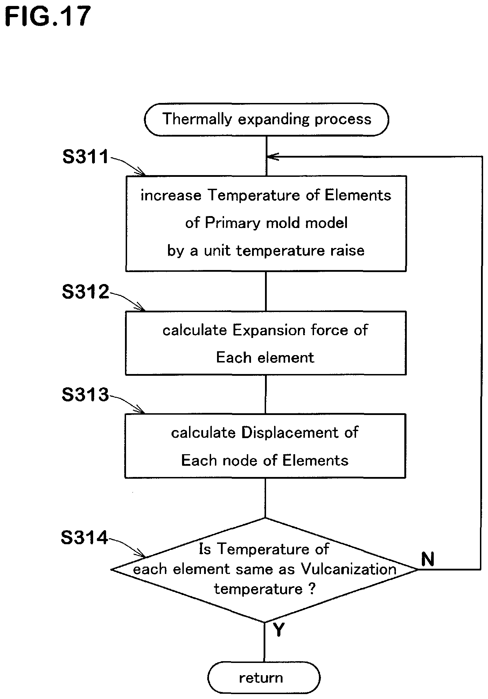

Fig. 17 shows a flowchart of this process S31.

### * Process S311

In the process S31, firstly, the ordinary temperature defined on the elements J(i) of the primary mold model 46 shown in Fig. 14 is increased by a unit temperature raise.

### (Process S311)

### * Process S312

Then, the expansion force of each element J(i) due to the temperature raise is calculated based on a predetermined isotropic coefficient of thermal expansion. (Process S312) Thus, the volume of the element J(i) is isotropically expanded according to the temperature of the elements J(i).

### * Process S313

In the process S31, next, a magnitude of displacement of each node 52 of each element J(i) is calculated by the use of the rigidity of each element J(i) and the expansion force of each element J(i) so that the rigidity balances with the expansion force. (Process S313)
Thus, the position of each node 52 when the primary mold model 46 is thermally-expanded by the unit temperature raise is calculated, and the coordinates of the nodes 52 are stored in the computer 1.

### * Process S314

In the process S31, next, it is checked if the current temperature of each node 52 of the elements J(i) of the primary mold model 46 is the same as the vulcanization temperature.

### (Process S314)

If the same as the vulcanization temperature ("Y" in the process S314), the next process S32 is performed. If not the same ("N" in the process S314), the process S311 to the process S314 are again performed.
Thus, the primary mold model 46 heated up to the vulcanization temperature from the ordinary temperature and thermally-expanded is calculated. Such thermally-expanded primary mold model 46 is stored in the computer 1.

The simulation in the thermally expanding process S31 can be made for example, by the use of "ABAQUS" a software for finite element analysis.

### * Process S32

In the mold deformation process S3 in this embodiment, next, the segment dies models 47 are tightened by the mold-closer model 48 to cause deformation. (Process S32)

In this process S32, as shown in Fig. 15, the slide part model 48b is moved in a tire axial direction (downward in the figure) from the position before tire vulcanization to the tightening position during vulcanization, and
there is calculated such state that the slide part model 48b radially inwardly pushes the segment dies models 47 through the pusher model 48a, namely, a deformed state of the segment dies models 47 due to the pressing force is calculated.

The deformation calculation of the primary mold model 46 is performed at time steps Tx (x=0,1,---) based on the shapes, material characteristics and the like of the elements J(i). Such deformation can be calculated by utilizing a commercially available finite element analysis application software for example used in the deformation calculation of the raw tire 2.

The deformation calculation is repeatedly performed until the deformation of the primary mold model 46 converges.

### * Bladder pressurizing process S33

In the mold deformation process S3 in this embodiment, the molding surface 46s of the primary mold model 46 is pressurized with the bladder model 49 to cause deformation.

### (Bladder pressurizing process S33)

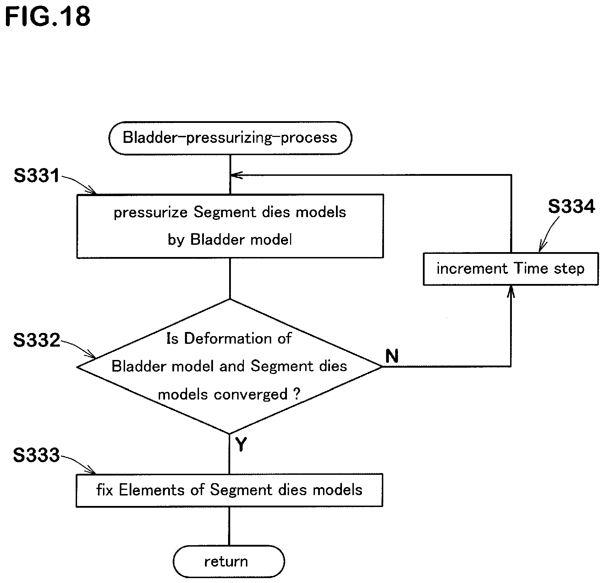

Fig. 18 is a flowchart of this process S33.

### * Process S331

In the process S33, firstly, the molding surface 46s of the segment dies models 47 is pressurized by the outer surface 49o of the bladder model 49. (Process S331)

In this process S331, as shown in Fig. 15, the bladder model 49 is set in the primary mold model 46 without the raw tire model 40, and a uniformly-distributed load w3 corresponding to the pressure of air for inflating the bladder 19 during tire vulcanization, is defined on the inner surface 49i of the bladder model 49, and there is calculated such state that at least part of the outer surface 49o of the bladder model 49 contacts with and pressurizes the molding surface 46s of the segment dies models 47 so that the segment dies models 47 are deformed.
The deformation calculation of the bladder model 49 and the segment dies models 47 is performed at time steps Tx (x=0,1,---).

### * Process S332

In the process S33, next, it is checked if the deformation of the bladder model 49 and segment dies models 47 has been converged. (Process S332)

If converged ("Y" in the process S332), the next process S333 is implemented.
If not yet converged ("N" in the process S332), the time step Tx is incremented by a unit time (process S334), and the process S331 and process S332 are again performed.

### * Process S333

In the process S33, next, the coordinates of the nodes 52 of the elements J(i) of the segment dies models 47 as shown in Fig. 14 are fixed in order that, if the uniformly-distributed load w3 is removed, the shape of the segment dies models 47 is prevented from restoring and maintains the deformed state caused by the pressure of the bladder model 49. (Process S333)

In this embodiment, the mold deformation process S3 comprises the thermally expanding process S31, the process S32 for tightening the segment dies models 47, and the bladder pressurizing process S33. Namely, the thermally-expanded primary mold model 46 is tightened by the mold-closer model 48, and pressurized by the bladder model 49 (this corresponds to the actual mold device 16). Then, the shape of the secondary mold model 51 is calculated. Accordingly, the molding surface 51s of the secondary mold model 51 can accurately simulate the molding surface 16s of the actual mold device 16 during vulcanization. But, according to the structure of the mold device 16, the mold deformation process S3 to calculate the shape of the secondary mold model 51 may include only one of the processes S31 to S33 or only two of the processes S31 to S33 to reduce the computational time.

### * Tire shape acquiring process S4

In the method in this embodiment, next, based on the shape of the secondary mold model 51, the shape of the tire during vulcanization is calculated by the computer 1. (Tire shape acquiring process S4)
In this embodiment, the raw tire model 40 is deformed based on the shape of the secondary mold model 51, and the shape of the tire model during tire vulcanization is calculated.

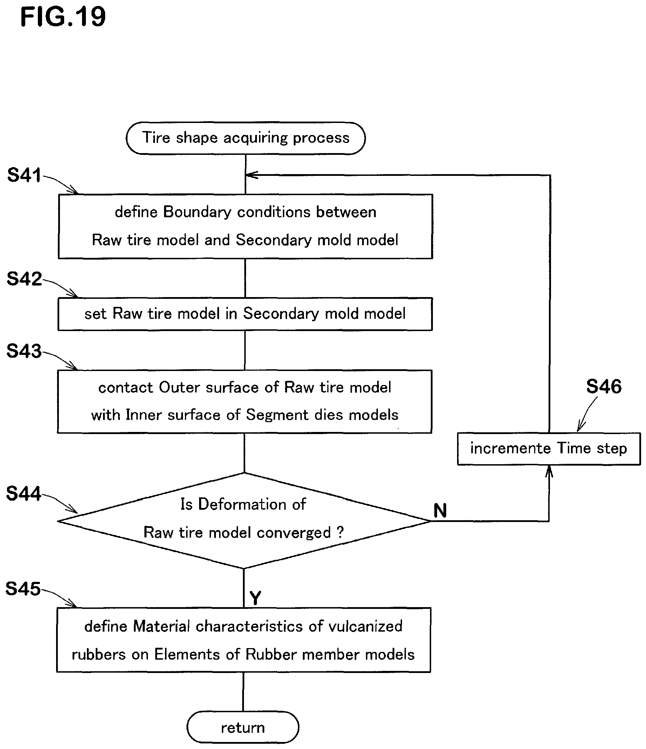

Fig. 19 shows a flowchart of this process S4.

### * Process S41

In the process S4 in this embodiment, firstly, boundary conditions between the raw tire model 40 (shown in Fig. 13) and the secondary mold model 51 (shown in Fig. 15) are defined.

### (process S41)

The boundary conditions include contact conditions between the raw tire model 40 and the secondary mold model 51 such that these models are inhibited to intrude each into the other. Such boundary conditions are stored in the computer 1.

### * Process S42

In the process S4, next, the raw tire model 40 is set in the secondary mold model 51. (Process S42)

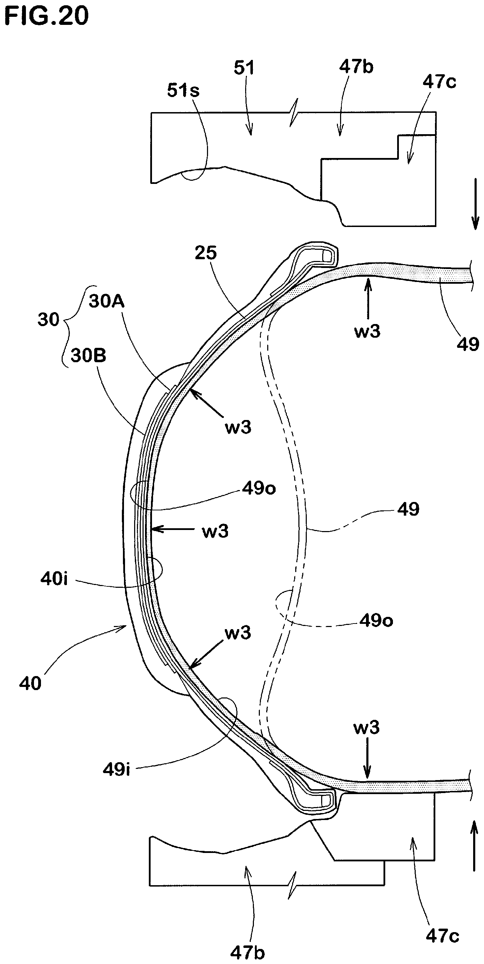

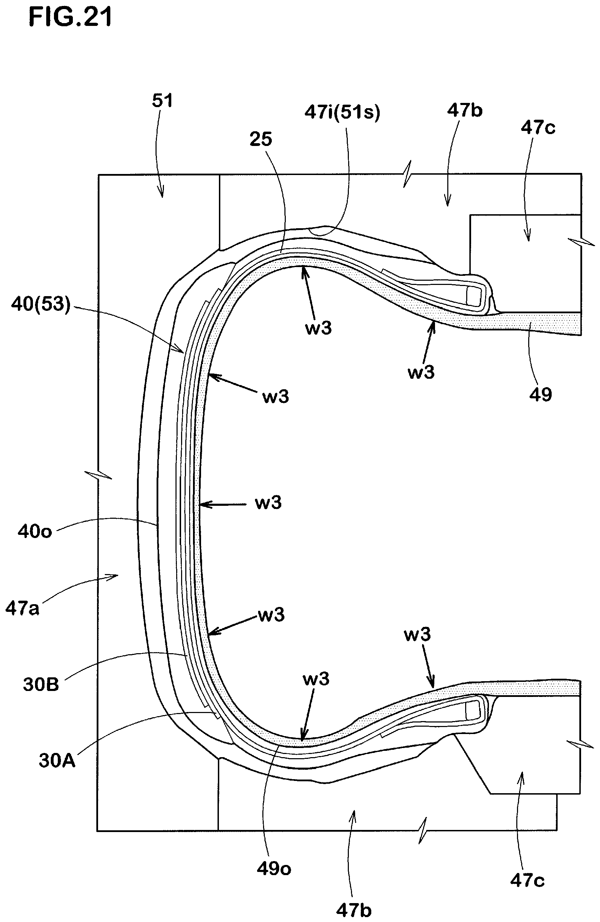

In this process S42, the bead portions 23c of the raw tire model 40 are held between the bladder model 49 and the bead segment dies models 47c of the secondary mold model 51. Incidentally, the bladder model 49 is separated from the bead segment dies models 47c. In this embodiment, the bead segment dies models 47c are united with the sidewall segment dies models 47b.
Next, the bead segment dies models 47c on one side in the tire axial direction are relatively approached the bead segment dies models 47c on the other side, while decreasing the axial distance between the bead portions 23c.
Then, as shown in Fig. 20, on the inner surface 49i of the bladder model 49, a uniformly-distributed load w3 is defined to inflate the bladder model 49.
As shown in Fig. 21, the outer surface 49o of the inflated bladder model 49 contacts with the inner surface 40i of the raw tire model 40, and thereby the raw tire model 40 is expanded radially outwardly.

In the process S42, on the outside of the expanded raw tire model 40, the sidewall segment dies models 47b are already combined with the tread segment dies models 47a and mold-closer model 48 so that the expanded raw tire model 40 is placed in the secondary mold model 51.

### * Process S43

In the tire shape acquiring process S4, next, the outer surface 40o of the raw tire model 40 is made contact with the inner surface 47i of the segment dies models 47. (Process S43)

In this process S43, by further inflating the bladder model 49 by increasing the load w3, the outer surface 40o of the raw tire model 40 is made contact with the molding surface 47s of the segment dies models 47 (the molding surface 51s of the secondary mold model 51).
As the elements G(i) of the rubber member models 31 of the raw tire model 40 have the material characteristics of unvulcanized rubber defined thereon, the raw tire model 40 is easily deformed so that the outer surface 40o fits to the molding surface 47s.

According to the deformation of the raw tire model 40, the carcass ply model 25 and the belt ply models 30A and 30B are also deformed.
In this embodiment, the carcass cord models 21 (shown in Fig. 9) and the belt cord models 27a and 27b (shown in Fig. 11) are each modeled by the beam elements F(i) as explained above, therefore, the cord models can deform independently from each other. Therefore, the raw tire model 40 can accurately simulate variations of the cords 11 in the angle and/or spacing due to the deformation of the reinforcing cord members 3 during vulcanization-molding the raw tire.
Further, on the cord models 21, 27a and 27b, the elastic moduli Ee and Ec as explained above are defined, the cord models 21, 27a and 27b can accurately simulate the elongations of the carcass cords 6c and belt cords 7c.
Accordingly, the simulation accuracy can be improved.
In this embodiment, as the segment dies models 47 are fixed in the process S333, if the raw tire model 40 is pressed against the molding surface 47s of the segment dies models 47, the segment dies models 47 are not moved.
Therefore, the deformation of the raw tire model 40 can be calculated while maintaining the molding surface 16s during vulcanization.

### * Process S44

In the tire shape acquiring process S4, next, it is checked if the deformation of the raw tire model 40 has been converged. (Process S44)

If converged ("Y" in the process S44), the next process S45 is performed.
If not yet converged ("N" in the process S44), the time step Tx is incremented by a unit time (process S46), and the process S43 and the process S44 are again performed.
Thus, in the tire shape acquiring process S4, the raw tire model 40 is deformed to fit to the molding surface 51s.

### * Process S45

In the tire shape acquiring process S4, next, on the elements G(i) of the rubber member models 31, material characteristics of the vulcanized rubber are defined. (Process S45)

As to the material characteristics of the vulcanized rubber, for example, density, elastic modulus, loss tangent, damping coefficient, isotropic coefficient of thermal expansion may be included.
Thus, the raw tire model 40 is changed from the original raw state to the tire model 53 having the shape during tire vulcanization including the rubber member models 31 having higher resilience of the vulcanized rubber.
The tire model 53 having the shape during tire vulcanization is took out from the secondary mold model 51.
The tire model 53 having the shape during tire vulcanization is stored in the computer 1.

### * Shrinking process S5

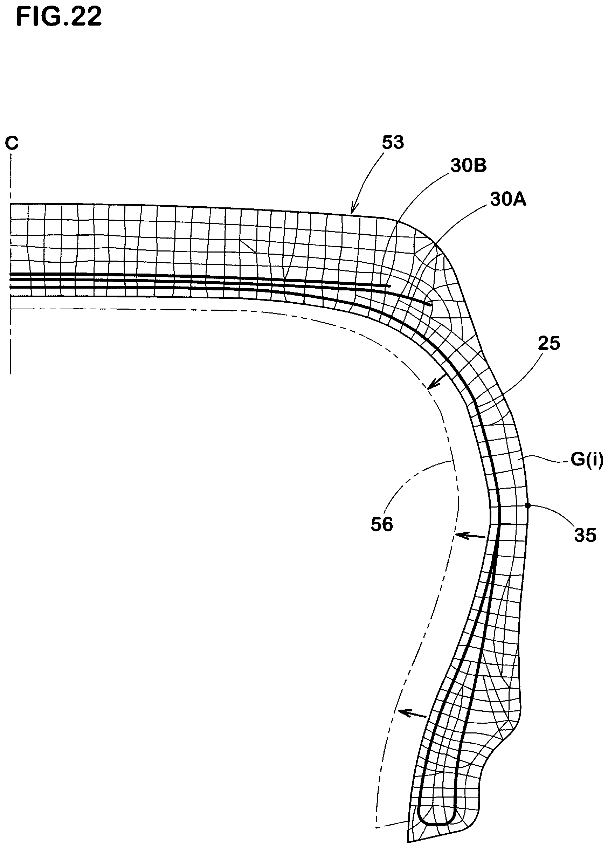

In the method in this embodiment, next, based on predetermined shrink conditions, the shape of the tire model 53 having the shape during tire vulcanization which is shrunk as shown in Fig. 22 is calculated. (Shrinking process S5)

The shrink conditions include the vulcanization temperature, the ordinary temperature, and a unit temperature decrease when decreasing from the vulcanization temperature to the ordinary temperature (for example, 10 to 20 deg.C).

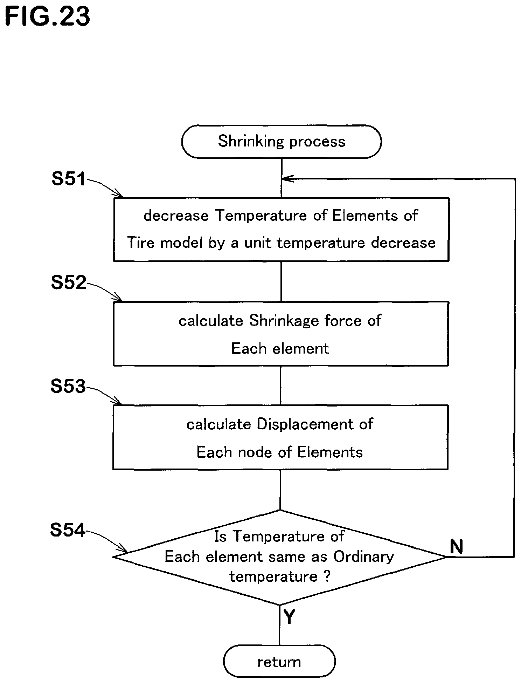

Fig. 23 shows a flowchart of this process S5.

### * Process S51

In this process S5, firstly, the temperature (initially vulcanization temperature) currently defined on the elements G(i) and the beam elements F(i) of the tire model 53 is decreased by a unit temperature decrease, namely, the decreased temperature is redefined on the elements G(i) and F(i).

### (Process S51)

### * Process S52

Next, based on the unit temperature decrease and the coefficient of thermal expansion, the shrinkage force of each element caused by the temperature decrease is calculated.

### (Process S52)

Incidentally, the shrinkage force of the element G(i) occurs isotropically. The shrinkage force of the beam element F(i) occurs in the longitudinal direction.

### * Process S53

In the shrinking process S5, next, by the use of the rigidity of each element F(i), G(i) and the shrinkage force of each element F(i), G(i), the magnitude of displacement of each of the nodes 24 and 35 of the elements F(i) and G(i) when the rigidity balances with the shrinkage force, is calculated.

### (Process S53)

Thereby, the positions of the nodes 24 and 35 of the tire model 53 shrunk by the unit temperature decrease are determined, and the coordinates of the nodes 24 and 35 are stored in the computer 1.

### * Process S54

In the shrinking process S5, next, it is checked if the current temperature of each node 24, 35 of the tire model 53 is the same as the ordinary temperature. (Process S54)

If the same as the ordinary temperature ("Y" in the process S54), the next process S6 is performed. If not the same ("N" in the process S54), the process S51 to the process S54 are again performed. Thereby, the tire model 53 shrunk by cooling from the vulcanization temperature to the ordinary temperature is calculated. Such shrunk tire model 53 is stored in the computer 1.

The simulation in the shrinking process S5 can be made for example, by using a software for finite element analysis used in the thermally expanding process S31.

As explained above, in the method in this embodiment, it is possible to calculate the shape of the tire model 56 corresponding to the tire model 53 having the shape during tire vulcanization which is further deformed by shrinking. Thus, it is possible to approximate the shape of the tire model 56 after shrinkage to that of the actual tire after vulcanization.

In the shrinking process S5 in this embodiment, the state of the tire model 53 cooled from the vulcanization temperature to the ordinary temperature is calculated. But, it is also possible to calculate a state of the tire model 53 when the tire is cooled by the use of a post cure inflation (PCI) machine to quickly cool the inflated tire by the use of a cooling medium.
In the shrinking process S5 in such case, a state of the tire model 53 having the shape during tire vulcanization when inflated by applying a uniformly-distributed load to the inner surface is calculated, and then
a state when cooled from the vulcanization temperature to the temperature of the cooling medium is calculated similarly to the processes S51-S54.
Thereby, in the shrinking process S5, it is possible to accurately approximate the shape of the tire model 56 to the shape of the actual tire manufactured by the use of a PCI machine.
In such case, it is preferable that the tire model 56 cooled down to the temperature of the cooling medium is further calculated for a state further cooled down to the ordinary temperature.
Thereby, in the shrinking process S5, it is possible to calculate a state of the tire cooled by the use of the PCI machine which is further cooled naturally.
Thus, the shape of the tire model 56 can be more accurately approximated to the shape of the actual tire.

### * Process S6

In the method in this embodiment, next, by the computer 1, it is checked whether the shape of the tire model 56 after shrinkage is good or not by comparing a target shape stored in the computer 1 in advance. (Process S6)

If good ("Y" in the process S6), the simulation method terminates.
If not good ("N" in the process S6), the tire design factors are changed (process S7), and the process S1 to process S6 are again performed.

As explained above, in the method in this embodiment, it is possible to create the tire model 56 after shrunk having good shape with high accuracy, therefore, such tire model 56 can be suitably used for a computer simulation, for example, tire rolling simulation, and an analysis of the finished state of the vulcanized tire for estimating the rolling resistance, wear resistance and the like.

In the tire shape acquiring process S4 in this embodiment, the shape of the tire model 53 having the shape during tire vulcanization is calculated by the use of the raw tire model 40.
But, it is also possible to define the tire model made up of a finite number of elements based on the shape of the tire during tire vulcanization which is determined by the shape of the molding surface 51s of the secondary mold model 51. In this case, the tire model 53 having the shape during tire vulcanization can be obtained without the need for the deformation calculation of the raw tire model 40 which is performed in the former embodiment, therefore, the computational time can be reduced.
It is preferable that the tire model 53 having the shape during tire vulcanization is further calculated for the state shrunk according to the above-described shrinking process S5. Thereby, it is possible to more accurately approximate the shape of the tire model 56 after shrinkage to that of the actual tire after vulcanization.

### Comparison Tests

According to the procedure shown in Fig. 6, the primary mold model of the mold before tire vulcanization was defined, and the shape of the primary mold model during tire vulcanization was calculated, and the secondary mold model having the obtained shape was defined. Further, the raw tire model of the raw tire having the structure shown in Fig. 2 was defined.
Then, the shape of the tire model during tire vulcanization was calculated by deforming the raw tire model so that the outer surface of the raw tire model fitted to the molding surface of the secondary mold model. (Embodiment 1 and Embodiment 2) In the raw tire model as Embodiment 1, each cord of the reinforcing cord members was numerically-modeled by the beam elements.
In the raw tire model as Embodiment 2, the cords of each reinforcing cord member was numerically-modeled by a two-dimensional shell element

For comparison, as a tire model during tire vulcanization, a tire model having a shape corresponding to that of the molding surface of the mold before tire vulcanization was defined. (Comparative example)
In the Comparative example, similarly to Embodiment 2, the cords of each reinforcing cord member was numerically-modeled by a two-dimensional shell element

In the comparison tests, for each of Embodiment 1, Embodiment 2 and Comparative example, a computer simulation to shrink the tire model during tire vulcanization was performed to obtain the tire model having the shape after vulcanization. The outer diameters of the tire models in Embodiment 1, Embodiment 2, Comparative example were compared with the outer diameter of an actual tire (actual example) vulcanization molded by the mold. The results are shown in Table 1. In the simulations, the computer softwares and parameters described in the above description were used.

**Table 1**

| | Embodiment 1 | Embodiment 2 | Comparative example | actual example |
|---|---|---|---|---|
| tire outer diameter (mm) | 420 | 418 | 415 | 421 |

As apparent from the test results, the outer diameters of Embodiment 1 and Embodiment 2 became more approximated to the outer diameter of the actual example in comparison with the outer diameter of Comparative example. Therefore, the methods according to Embodiment 1 and Embodiment 2 can simulate the vulcanized tire with accuracy.
Further, it was confirmed that the method according to Embodiment 1 utilizing the cord models made up of beam elements can approximate the shape to that of the actual example in comparison with the method according to Embodiment 2 utilizing the two-dimensional shell element as a cord layer or ply.

## Claims

1. A computer-implemented method for estimating a shape of a tire vulcanization-molded by a molding surface of a mold (16),
comprising the steps of
(A) defining a raw tire model (40) of a raw tire (2) before put in the mold (16), wherein the raw tire model (40) is made up of a finite number of elements,
(B) defining a primary mold model (46) of the mold (16) having the molding surface (46s, 51 s) before tire vulcanization, wherein the primary mold model (46) is made up of a finite number of elements,
(C) performing a deformation calculation of the primary mold model (46) based on conditions for tire vulcanization to obtain a shape of the molding surface (46s, 51 s) during tire vulcanization,
(D) defining a secondary mold model (51) having the obtained shape of the molding surface (46s, 51s),
(E) deforming the raw tire model (40) such that the outer surface of the raw tire model (40) fits to the molding surface (51 s) of the secondary mold model (51) to obtain a tire model (53) during tire vulcanization,
(F) calculating the shape of the tire model (56) by shrinking the tire model (53) having the shape during tire vulcanization, based on predetermined shrink conditions.

2. The method according to claim 1, wherein
step (C) comprises
calculating the shape of the molding surface (46s) during tire vulcanization by thermally-expanding the primary mold model (46) based on a temperature during tire vulcanization.

3. The method according to claim 1 or 2, wherein
the primary mold model (46) comprises
segment dies models (47) of segment dies (17) collectively forming the molding surface (46s), and
a mold-closer model (48) of a mold-closer (18) for tightening the segment dies (17) from the outside of the segment dies (17), and
the step (C) comprises
calculating the shape of the molding surface (46s) during tire vulcanization by tightening the segment dies models (47) of the primary mold model (46) with the mold-closer model (48) of the primary mold model (46).

4. The method according to any one of claims 1-3, wherein
the primary mold model (46) comprises
segment dies models (47) of segment dies (17) collectively forming the molding surface (46s), and
a bladder model (49) of an inflatable bladder (19) for pressing the raw tire (2) against the molding surface (16s) of the mold (16), and
the step (C) comprises
calculating the shape of the molding surface (16s) during tire vulcanization by pressurizing the molding surface (16s) of the primary mold model (46) with the bladder model (49).

5. The method according to any one of the preceding claims, wherein
the step (A) comprises
defining rubber member models (31 ) of unvulcanized rubber members (4) of the raw tire (2) each made up of a finite number of elements, and
defining material characteristics of the unvulcanized rubber members (4) on the rubber member models (31), and
the step (E) further comprises
defining material characteristics of vulcanized rubber members on the rubber member models (31) to simulate the unvulcanized rubber members (4) being vulcanized.

6. The method according to any one of the preceding claims, wherein
the raw tire (2) includes a reinforcing cord member (3) composed of reinforcing cords (11) covered with unvulcanized rubber (12), and
the step (A) comprises
defining reinforcing cord models (20) of the reinforcing cords (3) each made up of beam elements.

7. The method according to claim 6, wherein
on each of the reinforcing cord models (20),
an elastic modulus in the tensile direction and an elastic modulus in the compression direction are defined, wherein
the elastic modulus in the tensile direction is higher than the elastic modulus in the compression direction.

8. The method the according to any one of the preceding claims, wherein
the shrink conditions include a vulcanization temperature and an ordinary temperature.

9. The method according to any one of the preceding claims, wherein
the shrink conditions include a vulcanization temperature and a temperature of a cooling medium for cooling the tire after vulcanization.

## Patentansprüche

1. Computerimplementiertes Verfahren zum Abschätzen einer Gestalt eines Reifens, der durch eine Formgebungsoberfläche einer Form (16) durch Vulkanisation geformt wird, mit den Schritten:
(A) Definieren eines Rohreifenmodells (40) eines Rohreifens (2) vor dem Einsetzen in die Form (16), wobei das Rohreifenmodell (40) aus einer endlichen Zahl von Elementen erstellt wird,
(B) Definieren eines primären Formmodells (46) der Form (16) mit der Formgebungsoberfläche (46s, 51 s) vor der Vulkanisation, wobei das primäre Formmodell (46) aus einer endlichen Zahl von Elementen erstellt wird,
(C) Durchführen einer Verformungsberechnung des primären Formmodells (46) auf der Basis von Bedingungen zur Reifenvulkanisation, um eine Gestalt der Formgebungsoberfläche (46s, 51s) während der Reifenvulkanisation zu erhalten,
(D) Definieren eines sekundären Formmodells (51) mit der erhaltenen gestalt der Formgebungsoberfläche (46s, 51s),
(E) Verformen des Rohreifenmodells (40), so dass die äußere Oberfläche des Rohreifenmodells (40) zu der Formgebungsoberfläche (51s) des sekundären Formmodells (51) passt, um ein Reifenmodell (53) während der Reifenvulkanisation zu erhalten,
(F) Berechnen der Gestalt des Reifenmodells (56) durch Schrumpfen des Reifenmodells (53), das die Gestalt aufweist, während der Reifenvulkanisation, auf der Basis von vorbestimmten Schrumpfungsbedingungen.

2. Verfahren nach Anspruch 1, wobei Schritt (C) umfasst Berechnen der Gestalt der Formgebungsoberfläche (46s) während der Reifenvulkanisation durch thermisches Ausdehnen des primären Formmodells (46) auf der Basis einer Temperatur während der Reifenvulkanisation.

3. Verfahren nach Anspruch 1 oder 2, wobei
das primäre Formmodell (46) umfasst
Segmentformplattenmodelle (47) von Segmentformplatten (17), die gemeinsam die Formgebungsoberfläche (46s) bilden, und
ein Formschließermodell (48) eines Formschließers (18) zum Anziehen der Segmentformplatten (17) von außerhalb der Segmentformplatten (17), und
der Schritt (C) umfasst
Berechnen der Gestalt der Formgebungsoberfläche (46s) während der Reifenvulkanisation durch Anziehen der Segmentformplattenmodelle (47) des primären Formmodells (46) mit dem Formschließermodell (48) des primären Formmodells (46).

4. Verfahren nach einem der Ansprüche 1 bis 3, wobei
das primäre Formmodell (46) umfasst
Segmentformplattenmodelle (47) von Segmentformplatten (17), die gemeinsam die Formgebungsoberfläche (46s) bilden, und
ein Heizbalgmodell (49) eines aufblähbaren Heizbalges (19) zum Pressen des Rohreifens (2) gegen die Formgebungsoberfläche (16s) der Form (16), und
und der Schritt (C) umfasst
Berechnen der Gestalt der Formgebungsoberfläche (16s) während der Reifenvulkanisation durch Unterdrucksetzen der Formgebungsoberfläche (16s) des primären Formmodells (46) mit dem Heizbalgmodell (49).

5. Verfahren nach einem der vorhergehenden Ansprüche, wobei
der Schritt (A) umfasst
Definieren von Kautschukbestandteilmodellen (31) von unvulkanisierten Kautschukbestandteilen (4) des Rohreifens (2), die jeweils aus einer endlichen Zahl von Elementen erstellt werden, und
Definieren von Materialeigenschaften der unvulkanisierten Kautschukbestandteile (4) an den Kautschukbestandteilmodellen (31), und
der Schritt (E) ferner umfasst
Definieren von Materialeigenschaften von vulkanisierten Kautschukbestandteilen an den Kautschukbestandteilmodellen (31), um die unvulkanisierten Kautschukbestandteile (4), die vulkanisiert werden, zu simulieren.

6. Verfahren nach einem der vorhergehenden Ansprüche, wobei
der Rohreifen (2) ein Verstärkungskordelement (3) umfasst, das aus Verstärkungskorden (11) zusammengesetzt ist, die mit unvulkanisiertem Kautschuk (12) bedeckt sind, und
der Schritt (A) umfasst
Definieren von Verstärkungskordmodellen (20) der Verstärkungskorde (3), die jeweils aus Balkenelementen erstellt werden.

7. Verfahren nach Anspruch 6, wobei an jedem der Verstärkungskordmodelle (20) ein Elastizitätsmodul in der Zugrichtung und ein Elastizitätsmodul in der Kompressionsrichtung definiert wird, wobei
der Elastizitätsmodul in der Zugrichtung höher ist als der Elastizitätsmodul in der Kompressionsrichtung.

8. Verfahren nach einem der vorhergehenden Ansprüche, wobei die Schrumpfungsbedingungen eine Vulkanisationstemperatur und eine gewöhnliche Temperatur umfassen.

9. Verfahren nach einem der vorhergehenden Ansprüche, wobei die Schrumpfungsbedingungen eine Vulkanisationstemperatur und eine Temperatur eines Kühlmediums zum Kühlen des Reifens nach der Vulkanisation umfassen.

## Revendications

1. Procédé mis en oeuvre au moyen d'un ordinateur pour estimer une forme d'un pneumatique moulé avec vulcanisation par une surface de moulage d'un moule (16), comprenant les étapes consistant à
(A) définir un modèle de pneumatique brut (40) d'un pneumatique brut (2) avant de le placer dans le moule (16), dans lequel le modèle de pneumatique brut (40) est constitué d'un nombre fini d'éléments,
(B) définir un modèle de moule primaire (46) du moule (16) ayant la surface de moulage (46s, 51s) avant vulcanisation du pneumatique, dans lequel le modèle de moule primaire (46) est constitué d'un nombre fini d'éléments,
(C) effectuer un calcul de déformation du modèle de moule primaire (46) sur la base des conditions pour la vulcanisation du pneumatique afin d'obtenir une forme de la surface de moulage (46s, 51s) pendant la vulcanisation du pneumatique,
(D) définir un modèle de moule secondaire (51) ayant la forme obtenue de la surface de moulage (46s, 51s).
(E) déformer le modèle de pneumatique brut (40) de telle façon que la surface extérieure du modèle de pneumatique brut (40) s'accorde à la surface de moulage (51 s) du modèle de moule secondaire (51) pour obtenir un modèle de pneumatique (53) pendant la vulcanisation du pneumatique,
(F) calculer la forme du modèle de pneumatique (56) par rétraction du modèle de pneumatique (53) ayant la forme pendant la vulcanisation du pneumatique, sur la base de conditions de rétraction prédéterminées.

2. Procédé selon la revendication 1, dans lequel l'étape (C) comprend l'opération consistant à calculer la forme de la surface de moulage (46s) pendant la vulcanisation du pneumatique en provoquant une dilatation thermique du modèle de moule primaire (46) sur la base d'une température pendant la vulcanisation du pneumatique.

3. Procédé selon la revendication 1 ou 2, dans lequel
le modèle de moule primaire (46) comprend
des modèles de matrices segmentées (47) de matrices segmentées (17) qui forment collectivement la surface de moulage (46s), et
un modèle de fermoir le moule (48) d'un fermoir de moule (18) pour serrer les matrices segmentées (17) depuis l'extérieur des matrices segmentées (17), et
l'étape (C) comprend l'opération consistant à calculer la forme de la surface de moulage (46s) pendant la vulcanisation du pneumatique en serrant les modèles de matrices segmentées (47) du modèle de moule primaire (46) avec le modèle de fermoir de moule (48) du modèle de moule primaire (46).

4. Procédé selon l'une quelconque des revendications 1 à 3, dans lequel
le modèle de moule primaire (46) comprend
des modèles de matrices segmentées (47) de matrices segmentées (17) qui forment collectivement la surface de moulage (46s), et
un modèle de poche (49) d'une poche gonflable (19) pour presser le pneumatique brut (2) contre la surface de moulage (16s) du moule (16), et l'étape (C) comprend l'opération consistant à calculer la forme de la surface de moulage (16s) pendant la vulcanisation du pneumatique en mettant sous pression la surface de moulage (16s) du modèle de moule primaire (46) avec le modèle de poche (49).

5. Procédé selon l'une quelconque des revendications précédentes, dans lequel
l'étape (A) comprend les opérations consistant à
définir des modèles d'éléments en caoutchouc (31) d'éléments en caoutchouc non vulcanisés (4) du pneumatique brut (2) constitués chacun d'un nombre fini d'éléments, et
définir des caractéristiques matérielles des éléments en caoutchouc non vulcanisés (4) sur les modèles d'éléments en caoutchouc (31), et
l'étape (E) comprend en outre
l'opération consistant à définir des caractéristiques matérielles des éléments en caoutchouc vulcanisé sur les modèles d'élément en caoutchouc (31) pour simuler les éléments en caoutchouc non vulcanisés (4) qui sont en cours de vulcanisation.

6. Procédé selon l'une quelconque des revendications précédentes, dans lequel
le pneumatique brut (2) inclut un élément de câblés de renforcement (3) composée de câblés de renforcement (11) couverts avec du caoutchouc non vulcanisé (12), et l'étape (A) comprend l'opération consistant à définir des modèles de câblés de renforcement (20) des câblés de renforcement (3), constitués chacun d'éléments en barreau.

7. Procédé selon la revendication 6, dans lequel
sur chacun des modèles de câblés de renforcement (20) on définit un module d'élasticité dans la direction de traction et un module d'élasticité dans la direction de compression, dans lequel
le module d'élasticité dans la direction de traction est plus élevé que le module d'élasticité dans la direction de compression.

8. Procédé selon l'une quelconque des revendications précédentes, dans lequel
les conditions de rétraction incluent une température de vulcanisation et une température ordinaire.

9. Procédé selon l'une quelconque des revendications précédentes, dans lequel les conditions de rétraction incluent une température de vulcanisation et une température d'un milieu de refroidissement pour refroidir le pneumatique après vulcanisation.
